# EUROPEAN PATENT SPECIFICATION

(11) **EP 1 054 049 B1**
(45) Date of publication and mention of the grant of the patent: **02.04.2003**
(21) Application number: 99108666.1
(22) Date of filing: 17.05.1999
(51) Int. Cl.: C09K 19/34, C09K 19/42, G02F 1/1335

(54) **Optical compensators**
Optische Kompensatoren
Compensateurs optiques

(43) Date of publication of application: 22.11.2000
(73) Proprietor: CHISSO CORPORATION, Osaka-shi Osaka 530-6591 (JP)
(72) Inventor: Demus, Dietrich, D-06118 Halle (DE); Takeuchi, Hiroyuki, Ichihara-shi Chiba (JP); Janietz, Dietmar, D-14513 Teltow (DE)
(74) Representative: Müller-Boré & Partner Patentanwälte

(56) References cited:
- WO-A-99/13021
- US-A- 5 631 051
- GOLDMANN D ET AL: "SHEET-SHAPED MESOGENS BASED ON 1,3,5-TRIAZINES: VARIATION OF COLUMNAR MESOPHASES THROUGH INTERMOLECULAR HYDROGEN BONDING" LIQUID CRYSTALS, vol. 24, no. 3, 1 March 1998 (1998-03-01), pages 407-411, XP000737341 ISSN: 0267-8292
- GOLDMANN D ET AL: "NEW DISC-SHAPED TRIARYLAMINO-1,3,5-TRIAZINES WITH HETEROAROMATIC CENTRAL CORES" LIQUID CRYSTALS, vol. 21, no. 5, 1 November 1996 (1996-11-01), pages 619-623, XP000639764 ISSN: 0267-8292

## Description

The present invention relates to optical compensators and their use for liquid crystal displays.

Liquid crystal displays (LCD's) are widespread used in watches and clocks, photographic cameras, technical instruments, computers, flat TV screens, projection screens and large area information devices.

Ideal displays should show equal contrast, looking on them under different angles, deviating from the normal observation direction. The different kinds of displays based on nematic liquid crystals, however, possess an angle dependence of the contrast. This is, at angles deviating from the normal observation direction, the contrast becomes lower and the visibility of the information is diminished. The materials used in nematic LCD's are optically positively uniaxially birefringent, this is the extraordinary refractive index nₑ is larger than the ordinary refractive index nₒ : Δn = nₑ -nₒ > 0. The visibility of the displays under oblique angles can be improved by use of optical compensators with negative birefringence (Δn < 0 ).

In Japanese patent applications laid-open No. Heisei 4-229 828 and 4-258 923, a method of improvement of viewing angles using a phase difference film which is placed between a liquid crystal cell and a polarizer, is disclosed. However, the improvement of the viewing angle characteristic is very small and is not suitable for TV displays or use in cars or airplanes.

In Japanese patent applications laid-open No. Heisei 4-366 808 and 4-366 809, phase difference films comprising nematic liquid crystal cells filled with chiral nematic liquid crystal mixtures with tilted optical axis are disclosed. However, the optical compensators produced in this way are expensive, and the displays using such compensators have a high weight due to the double liquid crystal cells, and they are not suitable for applications.

Phase difference films, made from polycarbonates, with tilted optical axis are disclosed in Japanese patent. application laid-open No. Heisei 5-803 23. However, the production of the film that is produced by cutting uniaxial polycarbonates in tilted angles, is very complicated and causes high costs.

Phase difference films comprising light sensitive materials are disclosed in Japanese patent application laid-open No. Heisei 5-5823 in which the conformations can be changed by irradiation of light. By this method very light and cheap liquid crystals with wide viewing angles can be realized. However, the film is chemically very unstable against heat and light, and is not suited for practical applications.

Optical compensators comprising discotic nematic or monoaxial columnar phases which are oriented in the liquid crystalline state are disclosed in EP 0 656 559 A1. The solid-discotic phase transitions are very high, therefore heating to temperatures above 200° C is necessary. This is an unconvenient procedure and may cause decomposition in the quite sensitive materials.

An improvements of using discotic materials for optical compensators are disclosed in DE OS 4 339 395 A1, DE OS 195 19 928 A1 and GB 2 272 779 . The materials comprise discotic nematic phases with negative optical birefringence consisting of low molecular or polymer materials, including a large variety of chemical structures. All these phases must be oriented in the discotic liquid crystalline state, applying alignment layers or electrical or magnetic fields, after having transformed the materials in the liquid crystalline state at markably elevated temperatures.

A method for lowering the phase transition temperatures of the discotic nematic phases by at least 10° C is disclosed in EP 0 676 652 A2, however, the transition temperatures remain as high as 105° C or higher. This means, that this method also desires strong heating of the layers, connected with the said disadvantages.

In WO 96/11967 a procedure of producing negative birefringent rigid rod polymer films is disclosed, using materials of different chemical kind like polyamides, polyesters, polyesterimides and polyamideimides. The procedure needs spincoating of diluted solutions of the materials, drying under reduced pressure and elevated temperature for one hour, ramping to about 100° C for additional two hours and following heating of the film to about 150° C for additional five hours. This is an unconvenient procedure, and it is difficult to obtain homogenous films with equal optical properties .

We have found, that complexes formed from melamines disclosed in LIQUID CRYSTALS 24(3), 1998, 407-411 (compound 1) and substituted benzoic acids (compound 2 or compound 3) exist in a broad temperature region as columnar phases, having negative optical birefringence, are well suited for the construction of optical compensators for liquid crystal displays. 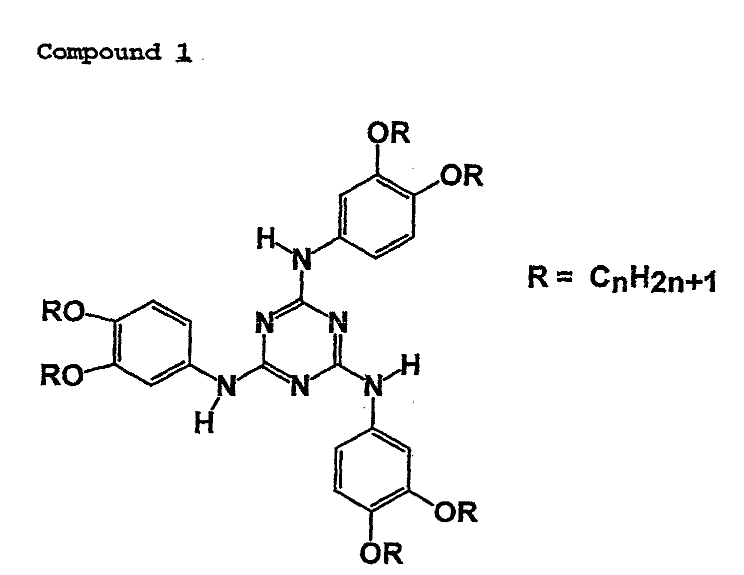 In the above-described R, n is 6 to 20, preferably 8 to 18. 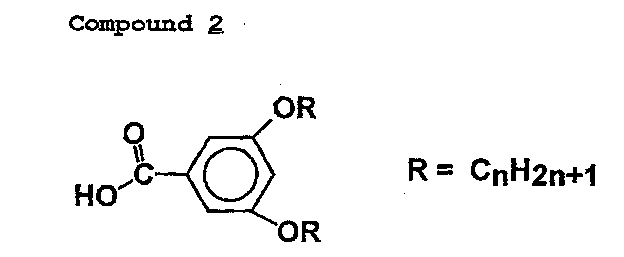 In the above-described R, n is 6 to 20, preferably 8 to 18. 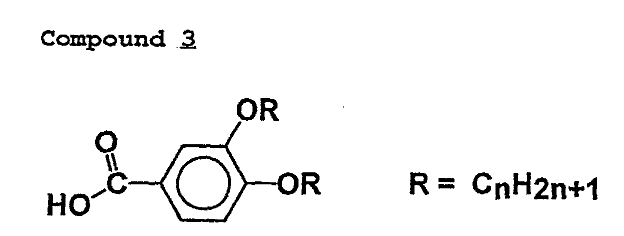 In the above-described R, n is 6 to 20, preferably 8 to 18.

By mixing of compound 1 with 2 preferably in equimolar amounts, complexes are formed due to hydrogen bonds, which exist in broad temperature regions as hexagonal columnar phases. These phases can be oriented, using conventional aligning layers like rubbed polyimide layers. The oriented phases show negative optical birefringence, the property which is needed for effective optical compensators for liquid crystal displays. Thin layers of the complexes, embedded between two aligning layers, are added to the liquid crystal display, positioning them between the display and one of the polarizers, embracing the device.

Mixing of compound 1 with 3 preferably in equimolar amounts yields complexes, which exist as rectangular columnar mesophases, possessing negative optical birefringence. Similar to the behaviour of complexes 1 with 2, they can be oriented by conventional aligning layers and as thin layers they can be used as optical compensators.

Mixtures of the complexes consisting of compounds 1 with 2, or 1 with 3 , due to occurrence of eutectic melting, possess enhanced existence regions of the columnar phases and are preferably used for construction of the optical compensators.

The present invention has constitutions of the following items (1) to (3).
(1) An optical compensator for liquid crystal displays containing columnar complexes consisting of substituted melamines (compound 1) and disubstituted benzoic acids (compound 2 or 3), or mixtures made thereof, having negative optical birefringence.
(2) An optical compensator according to item 1 where the columnar complex is a mixture of at least two complexes producing eutectic melting behavior consisting of substituted melamine (compound 1) and any of disubstituted benzoic acids (compound 2 or 3).
(3) A liquid crystal display held between crossed polarizers and optical compensator according to item 1 or 2.

Figure 1 shows an optical compensator according to the invention.

The plates made from glass or another optically transparent material 1, are covered on the inner side with an alignment layer 2. The gap between these two plates is filled with a complex material , consisting of equimolar amounts of compound 1 and 2, or 1 and 3.

Figure 2 shows the use of a compensator for improving the optical properties of a liquid crystal display.

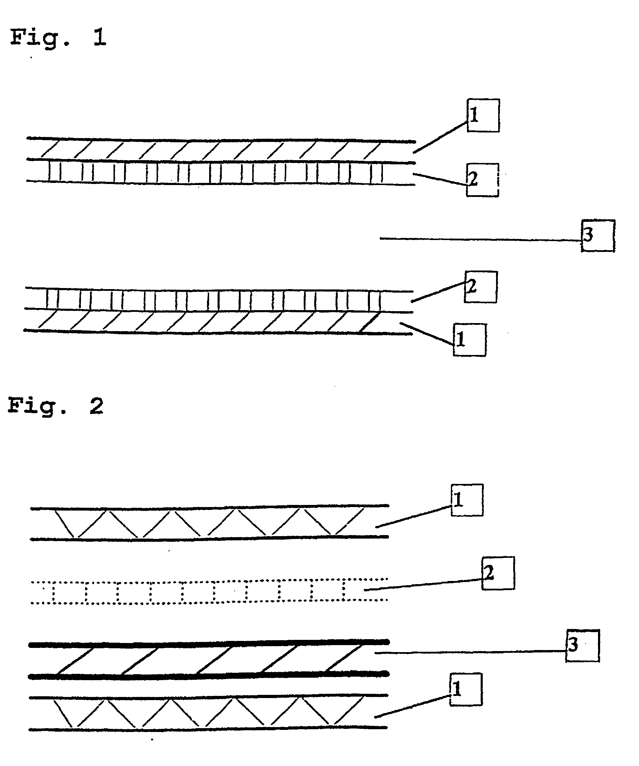

The whole setup is embraced by two polarizers 1, in crossed position. The optical compensator 2, according to the construction of Figure 1, in the figure is above the liquid crystal display 3. However, the compensator 2 can be arranged also below the liquid crystal display 3.

The compounds used in the present invention have already been disclosed by D. Goldmann, D. Janietz, R. Festag, C. Schmidt and J. H. Wendorff in Liquid Crystals **21**, 619-623 (1996).

The phase transition temperatures of the compounds were determined by means of a polarising microscope, equipped with heating stage. The results are shown as follows.

**Table 1**

| **Triarylamino-1,3,5-triazines** (shortly called melamines, compound 1) | | | | | | |
|---|---|---|---|---|---|---|
| **Compound** | **n** | **crystal** | **T**_{**m**}**/° C** | **columnar** | **T**_{**cl**}**/° C** | **isotropic** |
| 1a | 10 | ***** | 70.4 | ***** | 154.6 | ***** |
| 1b | 12 | ***** | 54.4 | ***** | 90.8 | ***** |
| 1c | 16 | ***** | 64.8 | ***** | 76.9 | ***** |
| Tₘ: melting temperature | | | | | | |
| T_{cl}: clearing temperature | | | | | | |

**Table 2**

| **Di-substituted benzoic acids** (compound 2 and 3) | | |
|---|---|---|
| **Compound** | **n** | **T**_{**m**} **/° C** |
| 2a | 10 | 60.6 |
| 2b | 12 | 66.5 |
| 2c | 16 | 79.5 |
| 3a | 12 | 122.6 |

**Table 3**

| **Phase transition temperatures of the complexes** | | | | | |
|---|---|---|---|---|---|
| **Complex** | **crystal** | **T**_{**m**}**/° C** | **columnar** | **T**_{**cl**}**/° C** | **isotropic** |
| 1*****³⁾/2a | ***** | 32.4 | *****¹⁾ | 68.4 | ***** |
| 1*****³⁾/2b | ***** | 34.5 | *****¹⁾ | 75.1 | ***** |
| 1*****³⁾/2c | ***** | 18.7 | *****¹⁾ | 73.6 | ***** |
| 1*****³⁾/3a | ***** | 62.2 | *****²⁾ | 88.7 | ***** |

| | | | | | |
|---|---|---|---|---|---|
| 1) hexagonal columnar structure | | | | | |
| 2) rectangular columnar structure | | | | | |
| 3) "1" means compound 1 in which n is 10. | | | | | |

In order to decrease the melting temperature and to enhance the existence region of the columnar phase of the complexes, mixtures of complexes producing eutectic melting behaviour can be used . Examples for such mixtures are presented in Table 4.

**Table 4**

| **Phase transition temperatures of mixtures of the complexes** | | | | |
|---|---|---|---|---|
| **Mixture** | **x**_{**1**} | **x**_{**2**} | **T**_{**m**}**/ ° C** | **T**_{**cl**}**/° C** |
| 1/2a + 1/2c | 0.2713 | 0.7287 | 4.8 | 72.12 |
| 1/2a + 1/3a | 0.567 | 0.433 | -5.3 | 80.14 |
| x₁, x₂ = mole fractions of the components 1 and 2 | | | | |

Synthesis of the compounds 1 are carried out as follows.

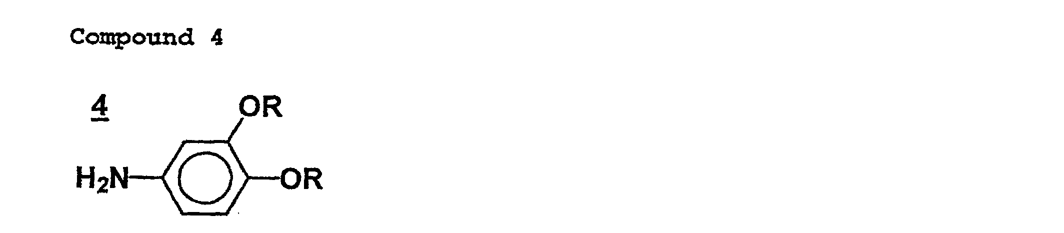

To a stirred solution of 2.6 mmol of the appropriate 3,4-dialkyloxyaniline (compound 4), dissolved in 50 ml of dry ethyl methyl ketone, 170 mg (0.87 mmol) of cyanuric chloride and 390 mg (2.8 mmol) of potassium carbonate were added. The mixture was stirred and heated at reflux under a nitrogen atmosphere for 4 hours. After cooling to room temperature, the solvent was removed under reduced pressure. The residue was poured into 50 ml of water and the resulting precipitate was collected by filtration, dried and recrystallized from acetone. Further purification was performed by flash chromatography (Kieselgel 60, 230-400 mesh) using light petroleum/ethyl acetate (10:4) as eluent, followed by a final recrystallization.

When 3,4-bis(decyloxy)-1-aminobenzene was used as a compound 4, 2,4,6-tris[3,4-bis(decyloxy)phenyl-1-amino]-1,3,5-triazine was obtained with a yield of 77.7%.

When 3,4-bis(dodecyloxy)-1-aminobenzene was used as a compound 4, 2,4,6-tris[3,4-bis(dodecyloxy)phenyl-1-amino]-1,3,5-triazine was obtained with a yield of 81.9%.

When 3,4-bis(hexadecyloxy)-1-aminobenzene was used as a compound 4, 2,4,6-tris[3,4-bis(hexadecyloxy)phenyl-1-amino]-1,3,5-triazine was obtained with a yield of 42.1%.

A compensating layer is prepared as follows.

A sample of the complex 1/2a has been heated into the isotropic state, and allowed to flow into a heated commercial cell consisting of two glass plates, on the inner surfaces covered with ITO layers and rubbed polyimide layers (producer: Donnelly company, cell gap: 7.5 µm). The construction of the cell corresponds to thus of Figure 1. Within some seconds the substance flowed into the cell, which then has been cooled to the temperature region of the columnar phase. After cooling, the columnar phase was homogenously oriented in the homeotropic orientation, which was proved by extinction of light between crossed polarizers.

By use of an optical compensator, a so-called λ-plate (Red I) , the optical character of the layer was investigated in a polarising microscope. By inserting the λ-plate in the diagonal direction, the colours in the first and the third quadrant have been shifted to yellow, in the second and fourth quadrant they have been shifted to blue. This indicated optical negative character, this is negative optical birefringence.

The compensating cell was added to a conventional liquid crystal cell (TNP or STN) held between crossed polarizers, according to the construction shown in Figure 2. By adding the compensating cell, the angular dependence of the optical contrast of the liquid crystal cell was substantially improved.

For construction of the compensating cells, preferably mixtures according to Table 4 are used.

## Claims

1. An optical compensator for liquid crystal displays containing columnar complexes consisting of substituted melamines (compound 1) and disubstituted benzoic acids (compound 2 or 3), or mixtures made thereof, having negative optical birefringence, 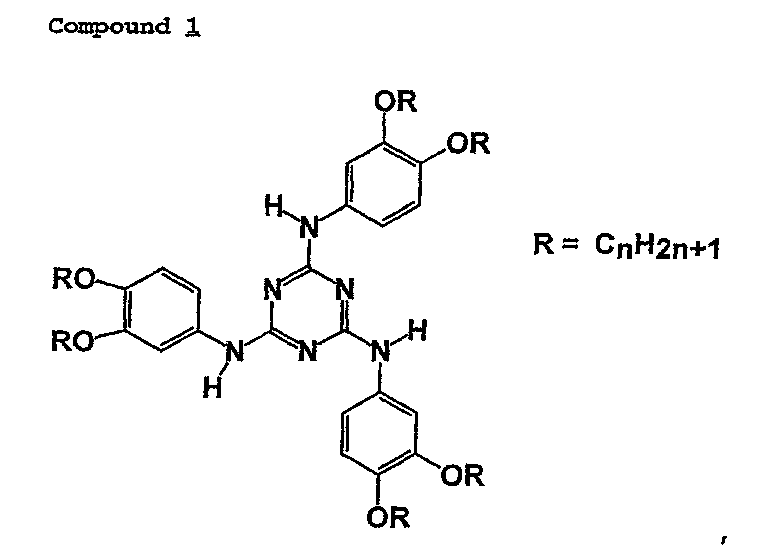 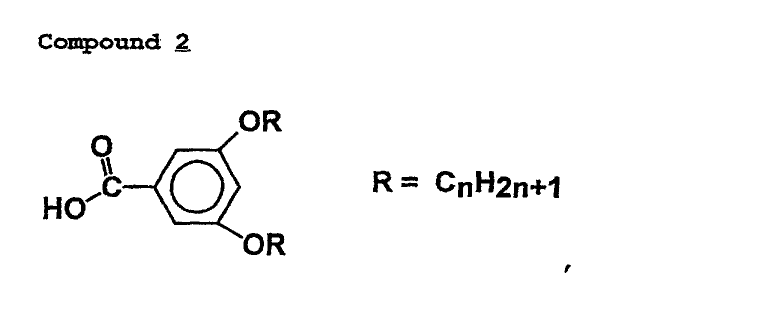 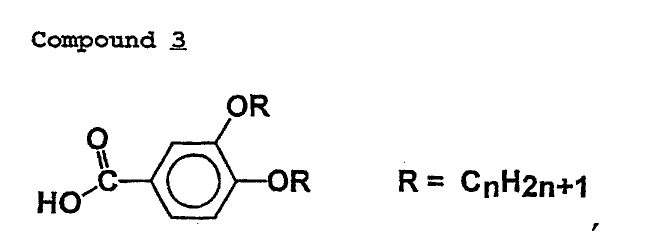 wherein n is 6 to 20 respectively in the above-described R's.

2. An optical compensator according to claim 1 where the columnar complex is a mixture of at least two complexes producing eutectic melting behavior consisting of substituted melamine (compound 1) and any of disubstituted benzoic acids (compound 2 or 3).

3. A liquid crystal display held between crossed polarizers and optical compensator according to claim 1 or 2.

## Patentansprüche

1. Optischer Kompensator für Flüssigkristallanzeigen, der säulenförmige Komplexe, die aus substituierten Melaminen (Verbindung 1) und disubstituierten Benzoesäuren (Verbindung 2 oder 3) oder aus daraus hergestellten Gemischen bestehen, mit einer negativen optischen Doppelbrechung enthält, 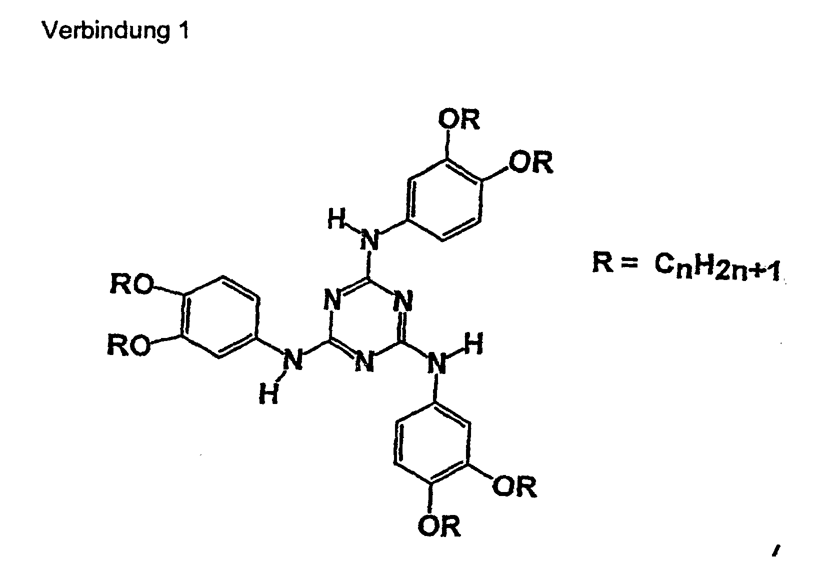 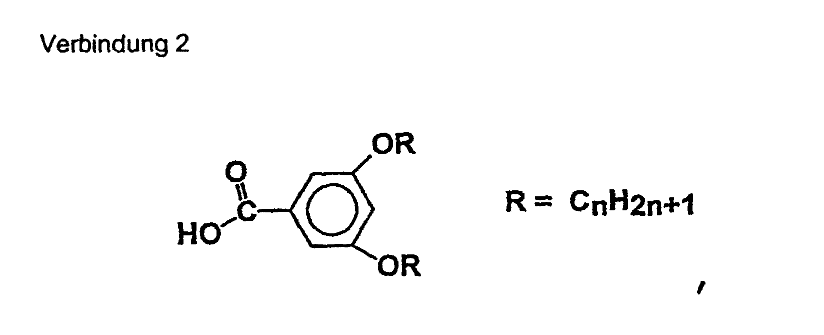 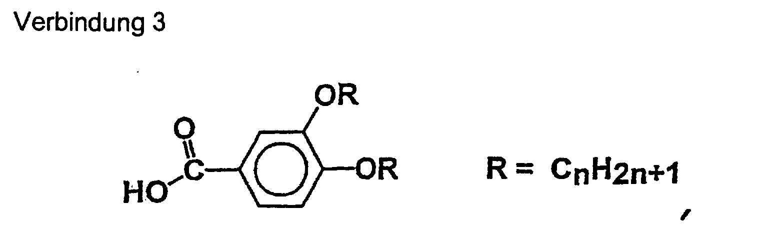 wobei n in den vorstehend beschriebenen Substituenten R 6 bis 20 ist.

2. Optischer Kompensator nach Anspruch 1, wobei der säulenförmige Komplex ein Gemisch aus mindestens zwei Komplexen ist, die ein eutektisches Schmelzverhalten ergeben, bestehend aus substituiertem Melamin (Verbindung 1) und jedweden disubstituierten Benzoesäuren (Verbindung 2 oder 3).

3. Flüssigkristallanzeige, gehalten zwischen gekreuzten Polarisatoren und einem optischen Kompensator nach Anspruch 1 oder 2.

## Revendications

1. Compensateur optique pour des afficheurs à cristaux liquides contenant des complexes en colonne consistant en des mélamines substituées (composé 1) et des acides benzoïques disubstitués (composé 2 ou 3), ou des mélanges formés de ceux-ci ayant une birefringence optique négative, 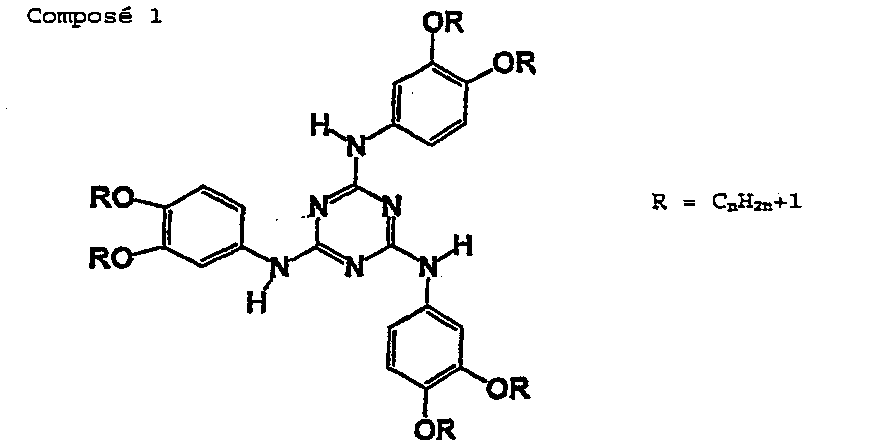 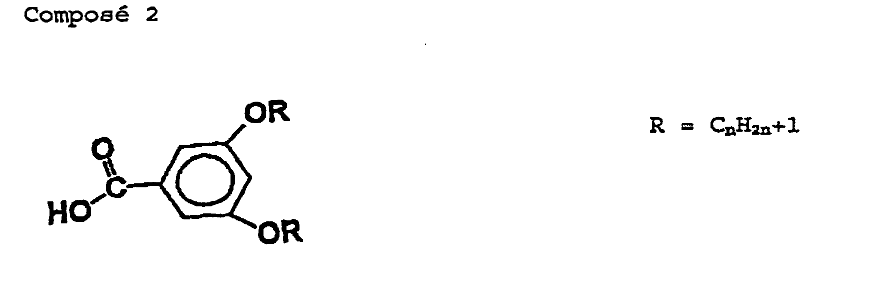 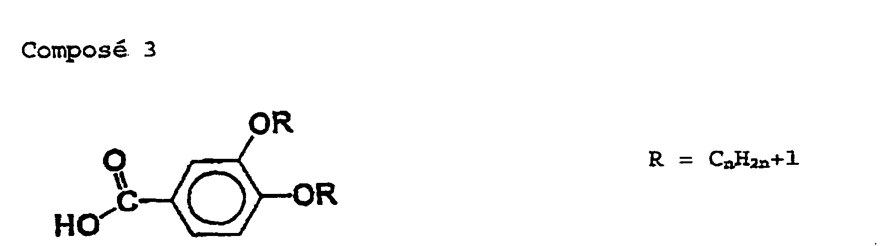 où n est de 6 à 20 respectivement dans les R décrits ci-dessus.

2. Compensateur optique selon la revendication 1, où le complexe en colonne est un mélange d'au moins deux complexes produisant un comportement de fusion eutectique consistant en une mélamine substituée (composé 1) et l'un quelconque des acides benzoïques disubstitués (composé 2 ou 3).

3. Afficheur à cristaux liquides maintenus entre des polariseurs croisés et un compensateur optique selon la revendication 1 ou 2.
